Europäisches Patentamt

(19) European Patent Office

Office européen des brevets

(11) Publication number: **0 050 235**
**B1**

(12) **EUROPEAN PATENT SPECIFICATION**

(45) Date of publication of patent specification: 02.11.83

(51) Int. Cl.³: **C 09 D 5/02, C 09 D 3/727, B 05 D 7/16**

(21) Application number: **81107694.2**

(22) Date of filing: **28.09.81**

(54) Autodeposition coating composition containing a self-crosslinkable polymer

(30) Priority: **29.09.80 US 191998**

(43) Date of publication of application:
**28.04.82 Bulletin 82/17**

(45) Publication of the grant of the patent:
**02.11.83 Bulletin 83/44**

(84) Designated Contracting States:
**DE FR GB IT NL SE**

(56) References cited:
**FR - A - 2 072 293**

(73) Proprietor: **UNION CARBIDE CORPORATION**
**Old Ridgebury Road**
**Danbury Connecticut 06817 (US)**

(72) Inventor: **Bassett, David Robinson**
**2018 Huber Road**
**Charleston West Virginia 25314 (US)**
Inventor: **Wang, Alan Enkuang**
**1016 Greenland Circle**
**South Charleston West Virginia 25309 (US)**

(74) Representative: **Wuesthoff, Franz, Dr.-Ing., et al**
**Patentanwälte Wuesthoff -v. Pechmann-Behrens-**
**Goetz**
**Schweigerstrasse 2**
**D-8000 München 90 (DE)**

Courier Press, Leamington Spa, England.

## Autodeposition coating composition containing a self-crosslinkable polymer

Autodeposition, also known as Autophoresis[R] or chemiphoresis, is a process for depositing an organic coating on a metal surface. The process involves the controlled release of multivalent metal ions from the metal surface which destabilizes dispersed polymer particles in the coating compositions such that a coating builds up on the metal surface. Such systems are well known in the coating art and are described in for example U.S. 3,776,848, U.S. 3,791,431, U.S. 4,108,817, U.S. 3,839,097, U.S. 3,829,371, U.S. 4,104,424 and U.S. 4,030,945.

Autodeposition, though a relatively new procedure for coating metal surfaces, has achieved considerable importance and wide use in the coating industry due to its many advantages over conventional systems, such as electrolytic deposition. By using autodeposition, practitioners of the art can now deposit an inorganic and an organic film simultaneously with fewer operating steps in less time while utilizing less floor space then conventional pretreatment/electro-coating systems. Autodeposition also reduces the air and water pollution associated with conventional coating systems because organic solvent usage is minimized. The use of autodeposition also significantly reduces the energy usage required by certain conventional electro-coating systems. A further advantage is the sharply decreased safety risk attained by avoiding the use of electric current in the coating bath.

A major disadvantage of autodeposition coatings is the very great difficulty in obtaining an autodeposition coating which will crosslink upon curing. It is believed that this difficulty is due to the low pH which is required for autodeposition. Conventional crosslinkers, when introduced to the highly acidic autodeposition coating compositions tend to cause destabilization of the autodeposition composition. Since crosslinking generally has a beneficial effect on the characteristics of the cured coating, an autodeposition coating composition which can remain stable as a coating bath and which will crosslink upon curing would be of great advantage.

## SUMMARY OF THE INVENTION

It has now been found that certain N-(alkoxymethyl) acrylamides, hereinafter more fully defined, can be incorporated into polymers which are suitable for use in autodeposition coatings. The autodeposition coating so formulated remains stable as a coating bath and crosslinks when cured.

## DESCRIPTION OF THE INVENTION

This invention comprises autodeposition coating compositions which contain a polymer which is comprised of from 1 to 30 weight percent, preferably from 3 to 15 weight percent of an N-(alkoxymethyl) acrylamide wherein the alkoxy group contains from 1 to 15 carbon atoms, preferably from 2 to 8 carbon atoms.

Illustrative of such N-(alkoxymethyl) acrylamides one can mention N-(n-butoxymethyl) acrylamide, N-(isobutoxymethyl) acrylamide, N-(ethoxymethyl) acrylamide, N-(methoxymethyl) acrylamide, N-(propoxymethyl) acrylamide, N-(pentoxymethyl) acrylamide, and the like. A preferred acrylamide is N-(isobutoxymethyl) acrylamide.

The balance of the polymer useful in the improved autodeposition coating compositions of this invention is comprised of virtually any monomers which can polymerize to produce polymers suitable for autodeposition compositions. Such monomers include ethylene, butadiene, ethyl acrylate, butyl acrylate, 2-ethylhexyl acrylate, butyl methacrylate, vinyl chloride, vinylidene chloride, methyl methacrylate, acrylonitrile, acrylic acid, methacrylic acid, styrene, etc. It is preferred that the balance of the N-(alkoxymethyl) acrylamide-containing polymer useful in the improved autodeposition coating compositions of this invention comprise:

(1) from 60 to 95 weight percent, preferably from 75 to 93 weight percent, of polymerizable ethylenically monounsaturated or diunsaturated monomers such as styrene, acrylonitrile, methacrylonitrile, vinyl chloride, vinylidene chloride, butadiene, ethylene, the esters of acrylic acid and methacrylic acid having from 1 to 20 carbon atoms, and the like;

(2) from 1 to 20 weight percent, preferably from 4 to 15 weight percent, of polymerizable ethylenically unsaturated carboxylic acid such as methacrylic acid, acrylic acid, itaconic acid, maleic acid and the like;

(3) from 0 to 20 weight percent, preferably from 0 to 5 weight percent, of a hydroxyl group containing polymerizable ethylenically monounsaturated monomer such as 2-hydroxyethyl acrylate, 2-hydroxypropyl methacrylate, and the like; and

(4) from 0 to 1.5 weight percent, preferably from 0 to 1 weight percent, of a polymerizable ethylenically polyunsaturated monomer, such as trimethylolpropane triacrylate, ethylene glycol dimethacrylate, and the like; wherein the concentrations of components (1)—(4) are based on the total combined weight of components (1)—(4).

The polymer is formulated into a latex using conventional techniques. The solid resinous, or polymer, portion of the latex comprises from 10 to 60 weight percent of the latex, preferably from 30 to 50 weight percent. The latex is present in the improved autodeposition coating compositions of this invention in a concentration such that the polymer or solid resinous coating materials comprise from 1 to 30 weight percent, preferably from 5 to 20 weight percent of the autodeposition composition.

The improved autodeposition coating composition also contains oxidizing agents in an amount sufficient to provide an oxidizing equivalent of at least 0.01 per liter of coating composition, preferably from 0.1 to 0.2. The upper equivalent value is not critical, and can be as high as one equivalent, or higher, per liter of coating bath. The oxidizing agents are well known to those skilled in the art and many are described in, for example, U.S. 4,030,945. Illustrative of the many suitable oxidizing agents one can name hydrogen peroxide, sodium or potassium permanganate, perborate, bromate, nitrite, nitrate, chlorate, and the like. A preferred oxidizing agent is hydrogen peroxide.

It is preferred that the latex used in the improved autodeposition compositions of this invention have a particle size of less than 0.3 $\mu$m; it is particularly preferred that the particle size be less than 0.15 $\mu$m.

The autodeposition coating compositions of this invention contain an acid compound in a sufficient concentration such that the pH of the composition is less than 5, preferably from 2 to 3. Illustrative of the many acids suitable for use in the composition of this invention one can name hydrofluoric acid, hydrochloric acid, formic acid, acetic acid, sulphuric acid, nitric acid, phosphoric acid, hydrobromic acid, hydroiodic acid, chloroacetic acid, trichloroacetic acid, lactic acid, tartaric acid, polyacrylic acid, and the like. The preferred acid is hydrofluoric acid.

A preferred autodeposition composition contains fluoride ion in a concentration of from 0.1 to 20 grams per liter, preferably from 2 to 8 grams per liter. A particularly preferred autodeposition composition contains ferric fluoride in a concentration of from about 1 to about 5 grams per liter.

The autodeposition coating compositions of this invention can also contain other additives commonly employed in autodeposition coatings. These additives are well known to those skilled in the art as are the concentrations in which they are normally present if employed; these additives include pigments, film aids, surfactants and other dispersing aids, protective colloid, leveling agents, foam control agents, auxiliary stabilizers and the like, and are discussed in the patents heretofore mentioned.

The balance of the autodeposition coating compositions of this invention, in sufficient amount such that the previously described concentrations of components are attained, is composed of water.

The compositions of this invention are useful in coating metal substrates which can be coated by autodeposition. These metals include, iron, steel, alloys of iron, galvanized steel, zinc, aluminum, and the like.

The crosslinkable autodeposition compositions of this invention are applied to the metal substrates using conventional autodeposition procedures and cured by use of the conventional techniques used to cure autodeposition coatings. Those skilled in the art are fully familiar with these conventional autodeposition coating and curing techniques and procedures and no further elucid-ation is necessary here.

When cured, the crosslinkable autodeposition coating compositions of this invention exhibit significantly improved solvent and block resistance over the heretofore available uncrosslinkable autodeposition coating compositions.

It is entirely unobvious why the autodeposition compositions of this invention containing a polymer containing from 1 to 30 weight percent of N-(alkoxymethyl) acrylamide retain their stability over extended periods of time and crosslink upon curing. Applicants have solved a problem of longstanding concern in the autodeposition art; by use of the teachings herein, practitioners of the autodeposition art are now provided with a stable autodeposition coating which will crosslink upon curing. There have been many attempts to produce such stable crosslinkable autodeposition coatings without success. That the polymer containing a specific amount of a well-defined monomer which applicant has shown to be useful in autodeposition coating compositions would self-crosslink upon curing without destabilizing the latex in the application both could not have been predicted from the prior art and was completely unexpected.

The following examples serve to further illustrate the invention. They are not intended to limit the invention in any way. Unless otherwise stated, all parts denote parts by weight.

Example 1

To a three liter glass reaction flask, equipped with a stirrer, thermometer, nitrogen inlet, monomer addition inlet and reflux condenser there were added 800 parts of distilled water and the flask was immersed in a thermostatted water bath such that the contents were brought to 65°C. There then were added 2.25 parts of dioctyl sodium sulfosuccinate and 4 parts of dicyclohexyl sodium sulfosuccinate as surfactants and 1.2 parts of sodium bisulfite initiator. A catalyst feed composed of 100 parts water and 2.5 parts of potassium persulfate was begun at a rate of 0.3 grams per minute; this catalyst feed was continued until the end of the post cook. Five minutes after the start of the catalyst feed, a monomer feed composed of a mixture of 310 parts of styrene, 399 parts of butyl acrylate, 70 parts of methacrylic acid and 21 parts of N-(isobutoxymethyl) acrylamide was begun at the rate of 4 grams/minute. At the end of the monomer feed the latex was kept at 65°C for 10 minutes, there was added 6 parts of a solution of 28 percent ammonium hydroxide in 10 parts of water and then post cooked for 5 minutes at 65°C. The resulting latex had a

**0 050 235**

Brookfield viscosity of 150 cps (150 mPa.s) at 25°C, a pH of 6.8 and a solids content of 42.9 weight percent; the polymer composition was 30/57/10/3-styrene/butyl acrylate/methacrylic acid/N-(isobutoxymethyl) acrylamide.

Fifty ml of an autodeposition starter solution composed of water, 15 ml of a 21 percent solution of hydrofluoric acid and 4.1 grams of ferric fluoride were diluted with 100 ml of water and slowly added to a mixture of 200 grams of the latex prepared above diluted with 400 ml of distilled water. Distilled water was further added to make the final volume of the coating bath 1 liter. The coating composition had a pH of about 2.2.

The coating bath was stored at room temperature for 2 weeks after which the coating composition was found to be still stable.

Example 2

Four cold rolled steel panels measuring 7.5 x 10 centimeters were cleaned with a dilute solution of an alkaline detergent containing phosphate and nonionic surfactants at 150°F(65°C) for 2 minutes followed by rinsing with a deionized water spray.

For comparative purposes a coating bath similar to that of Example 1 was prepared using a procedure similar to that of Example 1 except that no N-(isobutoxymethyl) acrylamide was employed; the polymer in this comparative coating bath had a composition of 35/55/10-styrene/butyl acrylate/methacrylate acid.

Two of the panels were dipped in the coating bath containing the autodeposition coating composition of this invention prepared in Example 1 and the other two were dipped in the comparative coating composition. Each panel was dipped in the bath for 1 minute at ambient temperature, removed from the bath and held in the air for 1 minute, rinsed with tap water for 1 minute, immersed for 1 minute in an autodeposition reaction rinse which had hexavalent chrome in solution and then baked for 15 minutes at 160°C.

After baking, the two panels coated with the autodeposition coating of this invention in a procedure similar to ASTM (D-2793)27, were pressed together face to face at 50 psig (34,5 N/cm²) for 4 hours to determine the block resistance of the coating; the two panels coated with the comparative coating underwent a similar test.

The coating formulated with the polymer containing N-(isobutoxymethyl) acrylamide displayed good block resistance; the panels did not stick to one another. The comparative coating displayed poor block resistance; the panels adhered to one another and considerable force was needed to separate the two panels.

This example demonstrates that the crosslinkable autodeposition coatings of this invention display significantly improved block resistance over that obtained from the heretofore available uncrosslinkable autodeposition coatings.

Two more steel panels were cleaned as described above. One panel was dipped into the autodeposition coating bath of this invention and the other panel was dipped into the comparative bath. Each panel was in the respective baths for one minute. Thereafter, each coated panel was held in the air for one minute, rinsed with tap water for one minute, and then baked for 15 minutes at 160°C.

Part of the cured coating was removed from each panel and the gel fraction of each coating was analyzed by solvent extraction to determine the extent of crosslinking according to a procedure similar to ASTM (D—297—18)37. The autodeposited coating of this invention which contained the polymer containing N-(isobutoxymethyl) acrylamide had a gel fraction of 87 percent; the comparative coating had a gel fraction of only 1.4 percent.

The results clearly demonstrate that the self-crosslinkable autodeposition coatings of this invention significantly increase the extent of crosslinking in autodeposition coatings over that obtained when the heretofore available uncrosslinkable polymers are employed in the autodeposition composition.

Example 3

A latex was prepared following a procedure similar to that described in Example 1 except that the monomer feed was composed of 29 parts of styrene, 56 parts of butyl acrylate, 10 parts of methyl methacrylate and 5 parts of N-(isobutoxymethyl) acrylamide. The resulting polymer had a composition of 29/56/10/5-styrene/butyl acrylate/methyl methacrylate/N-(isobutoxymethyl) acrylamide and the resulting latex had a Brookfield viscosity of 600 cps (600 mPa.s), a pH of 3.0, and a solids content of 40.6 weight percent. Following a procedure similar to that of Example 1, an autodeposition coating composition was prepared using the latex prepared above. The coating had a pH of about 2.2.

Two steel panels were prepared using a procedure similar to that of Example 2; one panel was coated with the autodeposition coating composition of this invention prepared above, and for comparative purposes, the other panel was coated with the comparative coating composition used in Example 2. The panels were evaluated for solvent resistance by ASTM 2792—69. The coated panels were soaked in regular leaded gasoline for 24 hours and then allowed to dry and recover in air for 30 minutes. The pencil hardness (ASTM(D—3363)27) of the coatings was determined before and after the soak. Both coatings had a pencil hardness of 2H before soaking. After the gasoline soak the selfcrosslinked coating composition of this invention containing the N-(isobutoxymethyl) acylamide had a pencil hardness of 2B while uncrosslinked coating had a pencil hardness of less than 4B.

This example clearly demonstrates that the self-crosslinkable autodeposition coatings of this invention display considerably improved solvent resistance over that obtained from the heretofore available uncrosslinkable autodeposition coatings.

Comparative Experiment A Following a procedure similar to that of Example 1, an autodeposition coating composition was formulated but without N-(alkoxymethyl)acrylamide in the polymer molecule; a conventional crosslinking agent was added to the coating bath after the latex had been produced. In this comparative experiment, the crosslinker added to the bath was 10.5 grams of hexamethoxymethyl melamine. The latex employed was a 42 percent solids composition of a copolymer of 45/45/5/5-styrene/ethyl acrylate/methacrylic acid/2-hydroxyethyl acrylate. All other conditions and amounts were the same as those employed in Example 1. The pH of the coating was about 2.2. About 2 hours after the preparation of the coating bath the coating composition had destabilized and the bath was a solid mass. This experiment, when compared with the results of Example 1 wherein the coating composition remained stable for at least 2 weeks, vividly demonstrates the great difficulty in attempting to employ the heretofore known crosslinkers in autodeposition coatings which are characterized by a low pH. It is this longstanding problem in the autodeposition art which applicants' invention has solved.

## Claims

1. In an aqueous autodeposition coating composition having a pH less than 5 comprising:
    (I) water;
    (II) a source of hydrogen ion;
    (III) an oxidizing agent; and
    (IV) a latex;
characterized in that the polymer of said latex contains from 1 to 30 weight percent, based on the polymer weight, of an N-(alkoxymethyl)acrylamide wherein the alkoxy group contains from 1 to 15 carbon atoms.

2. A composition as claimed in claim 1 wherein said N-(alkoxymethyl)acrylamide is present in the polymer in a concentration of from 3 to 15 weight percent.

3. A composition as claimed in claim 1 wherein the alkoxy group of the N-(alkoxymethyl)acrylamide contains from 2 to 8 carbon atoms.

4. A composition as claimed in claim 1 wherein said N-(alkoxymethyl)acrylamide is N-(isobutoxymethyl)acrylamide.

5. A composition as claimed in claim 1 wherein said pH is from 2 to 3.

6. A composition as claimed in claim 1 wherein said oxidizing agent is present in an amount sufficient to provide an oxidizing equivalent of at least 0.01 per liter of composition.

7. A composition as claimed in claim 1 wherein the polymer of said latex comprises from 1 to 30 weight percent of said aqueous autodeposition coating composition.

8. A composition as claimed in claim 1 wherein the polymer of said latex comprises from 5 to 20 weight percent of said aqueous autodeposition coating composition.

9. A composition as claimed in claim 1 wherein the polymer of said latex also contains from 70 to 99 weight percent of a mixture of (1) from 60 to 95 weight percent of a polymerizable ethylenically monounsaturated or diunsaturated monomer, (2) from 1 to 20 weight percent of a polymerizable ethylenically unsaturated carboxylic acid, (3) from 0 to 20 weight percent of a hydroxyl group containing polymerizable ethylenically monounsaturated monomer, and (4) from 0 to 1.5 weight percent of a polymerizable ethylenically polyunsaturated monomer, wherein the concentrations of components (1)—(4) are based on the total weight of components (1)—(4).

10. A composition as claimed in claim 1 wherein the polymer of said latex has a composition of about 30/57/10/3-styrene/butyl acrylate/methacrylate acid/N-(isobutyoxymethyl)-acrylamide.

11. A composition as claimed in claim 1 wherein the polymer of said latex has a composition of about 29/56/10/5-styrene/-butyl acrylate/methyl methyacrylate/N-(isobutoxymethyl) acrylamide.

12. A composition as claimed in claim 1 wherein there is additionally present fluoride ion in a concentration of from 0.1 to 20 grams per liter.

13. A composition as claimed in claim 1 wherein said source of hydrogen ion is hydrofluoric acid.

14. A composition as claimed in claim 1 wherein there is present ferric fluoride in a concentration of from about 1 to 5 grams per liter.

## Revendications

1. Composition aqueuse de revêtement par autodéposition de pH inférieur à 5, comprenant:
    (I) de l'eau;
    (II) une source d'ion hydrogène;
    (III) un agent oxydant; et
    (IV) un latex;
caractérisée en ce que le polymère dudit latex contient 1 à 30% en poids, sur la base du poids de polymère, d'un N-(alkoxyméthyl)acrylamide dont le groupe alkoxy contient 1 à 15 atomes de carbone.

2. Composition suivant la revendication 1, dans laquelle ledit N-(alkoxyméthyl)acrylamide est présent dans le polymère à une concentration de 3 à 15% en poids.

3. Composition suivant la revendication 1, dans laquelle le groupe alkoxy du N-(alkoxyméthyl)acrylamide contient 2 à 8 atomes de carbone.

4. Composition suivant la revendication 1, dans laquelle ledit N-(alkoxyméthyl)acrylamide est le N-(isobutoxyméthyl)acrylamide.

5. Composition suivant la revendication 1, dans laquelle le pH a une valeur de 2 à 3.

6. Composition suivant la revendication 1, dans laquelle l'agent oxydant est présent en une quantité suffisante pour établir un équivalent d'oxydation d'au moins 0,01 par litre de composition.

7. Composition suivant la revendication 1, dans laquelle le polymère dudit latex représente 1 à 30% en poids de ladite composition aqueuse de revêtement par autodéposition.

8. Composition suivant la revendication 1, dans laquelle le polymère dudit latex représente 5 à 20% en poids de ladite composition aqueuse de revêtement par autodéposition.

9. Composition suivant la revendication 1, dans laquelle le polymère dudit latex contient également 70 à 99% en poids d'un mélange (1) de 60 à 95% en poids d'un monomère polymérisable à mono-insaturation ou à di-insaturation éthylénique, (2) 1 à 20% en poids d'un acide carboxylique polymérisable à insaturation éthylénique (3) 0 à 20% en poids d'un monomère polymérisable à mono-insaturation éthylénique et (4) 0 à 1,5% en poids d'un monomère polymérisable à poly-insaturation éthylénique, les concentrations des composants (1) à (4) étant basées sur le poids total des composants (1) à (4).

10. Composition suivant la revendication 1, dans laquelle le polymère dudit latex a une composition d'environ 30/57/10/3-styrène/-acrylate de butyle/acide méthacrylique/N-(isobutoxyméthyl)acrylamide.

11. Composition suivant la revendication 1, dans laquelle le polymère dudit latex a une composition d'environ 29/56/10/5-styrène/-acrylate de butyle/méthacrylate de méthyle/N-(isobutoxyméthyl)acrylamide.

12. Composition suivant la revendication 1, qui contient en outre l'ion fluorure à une concentration de 0,1 à 20 g/l.

13. Composition suivant la revendication 1, dans laquelle la source d'ion hydrogène est l'acide fluorhydrique.

14. Composition suivant la revendication 1, qui contient du fluorure ferrique à une concentration d'environ 1 à 5 g/l.

**Patentansprüche**

1. Wässrige selbsttätig abscheidbare Überzugsmasse mit einem pH-Wert < 5 enthaltend
   (I) Wasser,
   (II) eine Wasserstoffionen bildende Substanz,
   (III) ein Oxidationsmittel und
   (IV) einen Latex

dadurch gekennzeichnet, daß das Polymere des Latex 1 bis 30 Gew.-%-bezogen auf Polymergewicht-N-(Alkoxymethyl)acrylamid, dessen Alkoxygruppe 1 bis 15 C-Atome enthält, aufweist.

2. Überzugsmasse nach Anspruch 1, dadurch gekennzeichnet, daß das N-(Alkoxymethyl)-acrylamid im Polymeren in einer Konzentration von 3 bis 15 Gew.-% vorhanden ist.

3. Überzugsmasse nach Anspruch 1, dadurch gekennzeichnet, daß die Alkoxygruppe des N-(Alkoxymethyl)acrylamids 2 bis 8 C-Atome enthält.

4. Überzugsmasse nach Anspruch 1, dadurch gekennzeichnet, daß das N-(Alkoxymethyl)-acrylamid N-(Isobutoxymethyl)acrylamid ist.

5. Überzugsmasse nach Anspruch 1, dadurch gekennzeichnet, daß der pH-Wert zwischen 1 und 3 liegt.

6. Überzugsmasse nach Anspruch 1, dadurch gekennzeichnet, daß Oxidationsmittel in ausreichender Menge für ein Oxidationsäquivalent von zumindest 0,01 je Liter Masse vorliegt.

7. Überzugsmasse nach Anspruch 1, dadurch gekennzeichnet, daß das Polymere des Latex 1 bis 30 Gew.-% der wässrigen Masse ausmacht.

8. Überzugsmasse nach Anspruch 1, dadurch gekennzeichnet, daß das Polymere des Latex 5 bis 20 Gew.-% der wässrigen Masse ausmacht.

9. Überzugsmasse nach Anspruch 1, dadurch gekennzeichnet, daß das Polymere der Latex auch 70 bis 99 Gew.-% eines Gemischs von (1) 60 bis 95 Gew.-% eines polymerisierbaren ethylenisch mono-ungesättigten oder di-ungesättigten Monomeren, (2) 1 bis 20 Gew.-% einer polymerisierbaren ethylenisch ungesättigten Carbonsäure, (3) 0 bis 20 Gew.-% eines Hydroxylgruppenhaltigen polymerisierbaren ethylenisch mono-ungesättigten Monomeren und (4) 0 bis 1,5 Gew.-% eines polymerisierbaren ethylenisch polyungesättigten Monomeren enthält; wobei die Konzentrationen der Komponenten (1) bis (4) auf das Gesamtgewicht der Komponenten (1) bis (4) bezogen ist.

10. Überzugsmasse nach Anspruch 1, dadurch gekennzeichnet, daß das Polymere des Latex eine Zusammensetzung von etwa 30/57/10/3 Styrol/Butylacrylat/Methacrylsäure/N-(Isobutoxymethyl)acrylamid aufweist.

11. Überzugsmasse nach Anspruch 1 dadurch gekennzeichnet, daß das Polymere des Latex eine Zusammensetzung von etwa 29/56/10/5 Styrol/Butylacrylat/Methylmethacrylsäure/N-(Isobutoxymethyl)acrylamid aufweist.

12. Überzugsmasse nach Anspruch 1, dadurch gekennzeichnet, daß die Masse zusätzlich Fluoridionen in einer Konzentration von 0,1 bis 20 g/l enthält.

13. Überzugsmasse nach Anspruch 1, dadurch gekennzeichnet, daß die Wasserstoffionen liefernde Substanz Flußsäure ist.

14. Überzugsmasse nach Anspruch 1, dadurch gekennzeichnet, daß $FeF_3$ in einer Konzentration von etwa 1 bis 5 g/l enthalten ist.